# EUROPÄISCHE PATENTSCHRIFT

(11) **EP 4 155 060 B1**
(45) Veröffentlichungstag und Bekanntmachung des Hinweises auf die Patenterteilung: **17.12.2025**
(21) Anmeldenummer: 22169879.8
(22) Anmeldetag: 26.04.2022
(51) Int. Cl.: B29C 65/48, B33Y 40/20, B33Y 80/00, B29C 64/165, B33Y 10/00

(54) **VERFAHREN ZUR HERSTELLUNG EINES ZUSAMMENGESETZTEN KÖRPERS SOWIE ZUSAMMENGESETZTER KÖRPER**
ASSEMBLED BODY AND METHOD OF MANUFACTURING AN ASSEMBLED BODY
PROCÉDÉ DE FABRICATION D'UN CORPS ASSEMBLÉ ET CORPS ASSEMBLÉ

(30) Priorität: 26.04.2021 DE 102021110627
(43) Veröffentlichungstag der Anmeldung: 29.03.2023
(73) Patentinhaber: Oechsler AG, 91522 Ansbach (DE)
(72) Erfinder: Sturm, Joachim, 91623 Sachsen bei Ansbach (DE); Schinzel, Frank, 90766 Fuerth (DE)
(74) Vertreter: Canzler & Bergmeier Patentanwälte Partnerschaft mbB

(56) Entgegenhaltungen:
- US-A1- 2005 026 134
- US-A1- 2005 208 271
- US-A1- 2012 288 672
- US-A1- 2014 252 674

## Beschreibung

Die vorliegende Erfindung betrifft ein Verfahren zur Herstellung eines zusammengesetzten Körpers aus wenigstens zwei Teilkörpern, wobei wenigstens einer der Teilkörper in einem additiven Fertigungsverfahren hergestellt wird, wobei die wenigstens zwei Teilkörper in einer Kammer einer Lösungsmittelatmosphäre ausgesetzt werden, so dass eine Oberfläche der Teilkörper geglättet wird. Die wenigstens zwei Teilkörper werden derart in der Kammer platziert, dass sie sich an wenigstens einer Fügefläche berühren und somit an der wenigstens einen Fügefläche durch die Lösungsmittelatmosphäre eine stoffschlüssige Verbindung zwischen den wenigstens zwei Teilkörpern entsteht. Außerdem betrifft die Erfindung einen gemäß dem Verfahren hergestellten zusammengesetzten Körper.

Verschiedene Verfahren der additiven Fertigung bzw. des 3D-Drucks sind bekannt. Die herzustellenden Körper werden dabei meist von einer Druckvorrichtung schichtweise aufgebaut. Meist wird hierzu die gezielte Verfestigung eines zunächst flüssigen oder losen Materials genutzt. Gemeinsame Vorteile dieser Verfahren sind beispielsweise eine einfache dezentrale Fertigung und eine kurze Zeitspanne zwischen einem Entwurf und dem hergestellten Produkt. Besonders begünstigt wird hierdurch beispielsweise die Herstellung von Prototypen.

Bei vielen additiven Fertigungsverfahren ist eine Nachbehandlung der hergestellten Körper notwendig. Beispielsweise müssen Stützstrukturen entfernt werden oder eine herstellungsbedingte sehr raue Oberfläche der Körper geglättet werden. Für das Glätten ist es beispielsweise bekannt, Körper aus einem additiven Fertigungsverfahren in einer entsprechenden Kammer einer ätzenden Atmosphäre oder einer Lösungsmittelatmosphäre auszusetzen. Die Effizienz dieses Prozesses lässt sich steigern, wenn mehrere hergestellte Körper gleichzeitig mit einer entsprechenden Atmosphäre behandelt werden.

Aus der DE 10 2015 115 821 A1 ist beispielsweise ein derartiges Verfahren bekannt, wobei dort insbesondere gelehrt wird, mehrere Körper gleichzeitig zu behandeln und die Körper beabstandet voneinander und von den Innenwänden der Kammer anzuordnen.

Additiven Fertigungsverfahren ist im Allgemeinen der Nachteil gemeinsam, dass durch ein begrenztes Volumen in der Druckvorrichtung nur Körper mit einer begrenzten Größe hergestellt werden können. Um diesen Nachteil zu umgehen ist es bekannt, größere Körper in kleinere Teilkörper zu unterteilen, die einzeln gedruckt und später zusammengefügt werden. Der Schritt des Zusammenfügens ist bei Teilkörpern mit filigranen Strukturen aber meist sehr aufwendig und dadurch zeit- und kostenintensiv. In den Schriften US 2005/0026134 A1 und US 2012/0288672 A1 wird das Zusammenfügen zweier Teilkörper, nachdem diese Teilkörper einer Lösungsmittelatmosphäre ausgesetzt waren, offenbart. Die Schriften US 2014/0252674 A1 und US 2005/0208271 A1 offenbaren das Zusammenfügen von Teilkörpern, die jeweils eine Gitterstruktur aufweisen.

Aufgabe der vorliegenden Erfindung ist es somit, ein Verfahren für die Herstellung eines zusammengesetzten Körpers sowie einen zusammengesetzten Körper zu schaffen, bei dem ein zusätzlicher Schritt des Zusammenfügens der Teilkörper eingespart werden kann.

Die Aufgabe wird gelöst durch ein Verfahren sowie einen zusammengesetzten Körper mit den Merkmalen der unabhängigen Patentansprüche.

Bei dem Verfahren zur Herstellung eines zusammengesetzten Körpers aus wenigstens zwei in einem additiven Fertigungsverfahren hergestellten Teilkörpern werden die wenigstens zwei Teilkörper in einer Kammer einer Lösungsmittelatmosphäre ausgesetzt, so dass eine Oberfläche der Teilkörper geglättet wird. Die wenigstens zwei Teilkörper werden derart in der Kammer platziert, dass sie sich an wenigstens einer Fügefläche berühren und somit an der wenigstens einen Fügefläche durch die Lösungsmittelatmosphäre eine stoffschlüssige Verbindung zwischen den wenigstens zwei Teilkörpern entsteht. Erfindungsgemäß wird vorgeschlagen, dass die wenigstens zwei Teilkörper an der wenigstens einen Fügefläche formschlüssig zusammengefügt werden.

Durch die Lösungsmittelatmosphäre werden chemische Bindungen an der Oberfläche der Teilkörper zumindest teilweise gelöst. Hierdurch können sich die Moleküle an der Oberfläche neu ordnen oder werden entfernt, wobei sich einerseits die Rauigkeit der Oberfläche reduziert. Andererseits entsteht hierdurch an der Fügefläche eine stoffschlüssige Verbindung zwischen den Teilkörpern. Ein separater Schritt des Zusammenfügens der Teilkörper kann somit eingespart werden. Ein in einem additiven Fertigungsverfahren hergestellter Teilkörper kann auf diese Weise beispielsweise mit wenigstens einem in einem Spritzgussverfahren hergestellten Teilkörper verbunden werden und/oder mit wenigstens einem weiteren in einem additiven Fertigungsverfahren hergestellten Teilkörper.

Es ist denkbar, dass zunächst die Teilkörper in der Kammer platziert werden und anschließend die Lösungsmittelatmosphäre in die Kammer eingebracht wird. Andererseits ist es denkbar, dass die Teilkörper in eine mit einer Lösungsmittelatmosphäre versehene Kammer eingeschleust werden. Die Lösungsmittelatmosphäre ist beispielsweise ein Aerosol, insbesondere ein Nebel, also ein Gemisch aus einem zerstäubten Lösungsmittel und beispielsweise Luft. Andererseits ist es denkbar Lösungsmitteldampf in reiner Form oder als Gasgemisch ebenfalls beispielsweise mit Luft zu verwenden.

Die Kammer kann beispielsweise zur Beschleunigung der Reaktion auf eine Temperatur von 25 bis 100 °C erwärmt werden. Vorzugsweise findet das Verfahren aber bei Zimmertemperatur statt. Die Lösungsmittelatmosphäre kann beispielsweise durch ein Versprühen eines Lösungsmittels oder durch ein Zerstäuben des Lösungsmittels, beispielsweise mittels eines Ultraschallzerstäubers hergestellt werden. Ein gezieltes Verdampfen des Lösungsmittels ist ebenfalls denkbar.

Aufgrund der Gefahr für die Gesundheit und einer potentiellen Explosionsgefahr ist die Kammer während der Präsenz der Lösungsmittelatmosphäre vorzugsweise hermetisch abgedichtet. Es ist denkbar, dass die Lösungsmittelatmosphäre vor einem Öffnen der Kammer am Ende des Verfahrens abgesaugt wird.

Das formschlüssige Zusammenfügen der Teilkörper an der Fügefläche verbessert den späteren Zusammenhalt der wenigstens zwei Teilkörper. Außerdem ist es auf diese Weise einfacher einen homogenen zusammengesetzten Körper herzustellen. Die Formschlüssigkeit kann sich beispielsweise dadurch ergeben, dass die Fügefläche zwischen den Teilkörpern von Begrenzungsflächen von Einheitszellen einer Gitterstruktur der Teilkörper gebildet werden.

Falls die Teilkörper jeweils eine Gitterstruktur aufweisen, berühren sich die Teilkörper beispielsweise entlang von Gitterstäben der Gitterstruktur. Diese Gitterstäbe können beispielsweise die Kanten von Einheitszellen der Gitterstruktur bilden. Die beschriebene Formschlüssigkeit kann sich hierbei auf die parallele Ausrichtung der Gitterstäbe beziehen. Eine Vielzahl an Fügeflächen kann hierbei aus einer Vielzahl von paarweise parallel ausgerichteten Gitterstäben bestehen.

Besondere Vorteile bringt es mit sich, wenn wenigstens einer der Teilkörper in einem pulverbasierten 3D-Druckverfahren hergestellt werden. Dieses Verfahren ermöglicht es, im Gegensatz zu anderen 3D-Druckverfahren, die Teilkörper ohne eine zusätzliche Stützstruktur zu drucken. Ein nachträgliches Entfernen einer Stützstruktur entfällt somit.

Bei pulverbasierten 3D-Druckverfahren werden die zu druckenden Körper Schicht für Schicht aus einem Pulver aufgebaut. Hierbei wird in der Regel mit der untersten Schicht begonnen, wobei beispielsweise ein auf eine Pulverschicht aufgetragenes Bindemittel das Pulver gezielt verhärtet und verbindet. Anschließend wird die nächste Pulverschicht aufgetragen und ebenfalls mit dem Bindemittel behandelt. Es ist ebenfalls denkbar das Pulver durch punktuelles Erhitzen zu erhärten und zu verbinden.

Der gedruckte Körper befindet sich hierbei zu jeder Zeit in einer Umgebung aus losem Pulver, die den Körper schützt und stützt. Der Körper weist nach diesem Verfahren in der Regel eine raue Oberfläche auf, die aber im Rahmen des erfindungsgemäßen Verfahrens in der Lösungsmittelatmosphäre geglättet wird. Selbstverständlich können beide oder alle der wenigstens zwei Teilkörper in dem pulverbasierten 3D-Druckverfahren hergestellt werden.

Ebenso ist es vorteilhaft, wenn wenigstens einer der zwei Teilkörper mit einer Gitterstruktur hergestellt wird. Durch die Gitterstruktur kann mit geringem Materialeinsatz ein großes Volumen ausgefüllt werden. Auch lässt sich die Elastizität des Teilkörpers durch die Gitterstruktur exakt steuern. Dies ist insbesondere bei Polsterungen vorteilhaft. Idealerweise ist die Fügefläche der Teilkörper im zusammengesetzten Körper, zumindest anhand einer inhomogenen Elastizität, nicht mehr erkennbar. Es können beide oder alle der wenigstens zwei Teilkörper mit einer Gitterstruktur hergestellt werden. Hierbei stimmt die Gitterstruktur der Teilkörper vorzugsweise überein.

Vorteilhaft ist es, wenn die wenigstens zwei Teilkörper derart in der Lösungsmittelatmosphäre platziert werden, dass sie sich an einer Vielzahl von Fügeflächen berühren, wobei die Vielzahl der Fügeflächen einer Vielzahl von Begrenzungsflächen der Einheitszellen der Struktur der Teilkörper entspricht. Hierdurch wird sichergestellt, dass sich die Strukturen der Teilkörper zu einer möglichst einheitlichen Struktur des zusammengesetzten Körpers ergänzen. Die Homogenität insbesondere in Bezug auf die Elastizität des Körpers wird hierdurch verbessert. Die beschriebene Struktur kann jede Struktur sein, die aus einer Vielzahl aus gleichen Einheitszellen, also kleinsten raumfüllenden Bauelementen, aufgebaut ist. Insbesondere ist die Struktur eine Gitterstruktur. Die Begrenzungsflächen trennen die einzelnen Einheitszellen voneinander. Sie müssen nicht zwangsläufig mit Material gefüllt sein. Auch beispielsweise miteinander verbundene Gitterstäbe können die Kanten einer Begrenzungsfläche bilden.

Vorzugsweise wird dieser Aspekt bereits bei dem Entwurf bzw. bei der Unterteilung des Körpers in Teilkörper vor der Herstellung der Teilkörper berücksichtigt. Beispielsweise wird die Gitterstruktur des Körpers entlang von Begrenzungsflächen der Einheitszellen der Struktur in die Teilkörper getrennt (sog. "zellkonformes Schneiden").

Auch ist es von Vorteil, wenn die Teilkörper derart zusammengefügt werden, dass eine einheitliche Gitterstruktur des zusammengesetzten Körpers entsteht. Wie bereits beschrieben, kann hierdurch die Homogenität, insbesondere in Bezug auf die Elastizität des Körpers, verbessert werden.

Vor allem wenn der Körper eine Polsterung oder einen Teil einer Polsterung darstellt, mit der ein späterer Benutzer direkten Kontakt hat, können Inhomogenitäten der Elastizität unangenehm für den Benutzer und somit nachteilig für einen wirtschaftlichen Erfolg des Körpers sein. Dies gilt es zu vermeiden.

Vorteile bringt es mit sich, wenn die wenigstens zwei Teilkörper mit wenigstens einem Verbindungselement, insbesondere einem Verbindungsgelenk, hergestellt werden. Zusätzlich oder alternativ ist es vorteilhaft, wenn die wenigstens zwei Teilkörper über das Verbindungselement zusammengeklappt werden, so dass die beiden Teilkörper mit ihren korrespondierenden Fügeflächen aneinander anliegen. Ein fehlerfreies Zusammensetzen der Teilkörper entlang der wenigstens einen Fügefläche kann hierdurch gewährleistet werden. Insbesondere kann die Bewegungsfreiheit der Teilkörper zueinander durch ein oder mehrere Gelenke derart eingeschränkt sein, dass die Teilkörper nur auf eine Art zu dem Körper zusammengesetzt werden können. Insbesondere ein "Zusammenklappen" der Teilkörper zu dem Körper ist denkbar. Das Verbindungsgelenk bzw. die Verbindungsgelenke können hierbei ebenfalls durch das additive Herstellungsverfahren hergestellt werden. Gegebenenfalls kann das Gelenk bzw. können die Gelenke nach dem Verbinden der Teilkörper zu dem Körper wieder entfernt werden.

Bei einem besonders breiten Körper, der eine Breite der Druckvorrichtung überschreitet, ist es denkbar, den Körper in wenigstens zwei übereinander druckbare Teilkörper zu unterteilen, die gegebenenfalls mit dem beschriebenen Verbindungsgelenk oder mit den beschriebenen Verbindungsgelenken verbunden sind. Insbesondere zwei Verbindungsgelenke können vorgesehen sein.

Des Weiteren ist es vorteilhaft, wenn die wenigstens zwei Teilkörper aus einem Thermoplast, insbesondere Polyamid 12 (PA12) und/oder einem Elastomer, insbesondere TPU, hergestellt werden. Einerseits wird hierdurch die Herstellung der Teilkörper erleichtert. Andererseits entsteht hierdurch nach dem Zusammenfügen der Teilkörper beispielsweise ein elastisch verformbarer aber formstabiler Körper, der insbesondere als Polsterung eingesetzt werden kann.

Beispiele für Elastomere sind Vulkanisate von Natur- oder Silikonkautschuk. Die Abkürzung TPU steht für thermoplastisches Polyurethan. Polyurethane sind Kunststoffe oder Kunstharze, die aus einer Polyadditionsreaktion von Dialkoholen oder Polyolen mit Polyisocyanaten entstehen. Vor allem Polsterungen oder Materialien zur Wärmeisolierung lassen sich vorteilhaft aus aufgeschäumtem TPU herstellen. Die thermoplastischen Eigenschaften sind besonders vorteilhaft bei der Herstellung von Produkten aus diesen Materialien.

Besondere Vorteile bringt es mit sich, wenn die Lösungsmittelatmosphäre Chloroform, Tetrahydrofuran, Dimethylformamid, Dimethylacetamid, N-Methylpyrrolidon, Dimethylsulfoxid, Hexafluorisopropanol, Pyridin und/oder Benzylalkohol enthält. Diese Lösungsmittel sind in der Lage, vor allem TPU aufzulösen und somit geeignet, in einer Atmosphäre die Oberfläche der Teilkörper zu glätten und eine stoffschlüssige Verbindung zwischen den Teilkörpern herzustellen. Es ist denkbar eine Mischung aus verschiedenen Lösungsmitteln in der Lösungsmittelatmosphäre zu verwenden. Wie bereits beschrieben, kann zur Herstellung der Lösungsmittelatmosphäre aus diesen Lösungsmitteln ein Aerosol und/oder ein Dampf hergestellt werden.

Der erfindungsgemäße zusammengesetzte Körper ist aus wenigstens zwei Teilkörpern zusammengesetzt, wobei wenigstens einer der Teilkörper in einem additiven Fertigungsverfahren hergestellt ist. Er zeichnet sich dadurch aus, dass er gemäß eines Verfahrens der vorherigen Beschreibung hergestellt ist. Wie bereits beschrieben, weist der Körper den Vorteil auf, dass ein Zusammenfügen der Teilkörper bereits während eines Glättens der Oberfläche der Teilkörper stattfindet, und damit ein zusätzlicher Arbeitsschritt des Zusammenfügens während der Herstellung des Körpers eingespart werden kann. Außerdem kann der Körper eine Größe aufweisen, die den Druckbereich einer Druckvorrichtung für ein additives Fertigungsverfahren übersteigt. Es ist denkbar, dass der Körper aus einer Vielzahl von Teilkörpern zusammengesetzt ist.

Der Körper weist beispielsweise eine Gitterstruktur auf, wobei die Gitterstruktur vorzugsweise homogen über die gesamte Ausdehnung des Körpers ist. Beispielsweise wiederholen sich Motive der Gitterstruktur in regelmäßigen Abständen. Der Körper ist beispielsweise aus einem Elastomer und insbesondere aus TPU hergestellt. Der Körper ist insbesondere als Polsterung oder Teil einer Polsterung mit einer homogenen Elastizität ausgebildet.

Weitere Vorteile der Erfindung sind in den nachfolgenden Ausführungsbeispielen beschrieben. Es zeigen:
- **Figur 1**: ein zweidimensionales Schema der Teilkörper vor dem Zusammenfügen,
- **Figur 2**: ein zweidimensionales Schema der Herstellung des Körpers nach dem erfindungsgemäßen Verfahren,
- **Figur 3**: ein dreidimensionales Schema der Teilkörper vor dem Zusammensetzen, und
- **Figur 4**: ein dreidimensionales Schema des zusammengesetzten Körpers.

Bei der nachfolgenden Beschreibung der Figuren werden für in den verschiedenen Figuren jeweils identische und/oder zumindest vergleichbare Merkmale gleiche Bezugszeichen verwendet. Die einzelnen Merkmale, deren Ausgestaltung und/oder Wirkweise werden meist nur bei ihrer ersten Erwähnung ausführlich erläutert. Werden einzelne Merkmale nicht nochmals detailliert erläutert, so entspricht deren Ausgestaltung und/oder Wirkweise der Ausgestaltung und Wirkweise der bereits beschriebenen gleichwirkenden oder gleichnamigen Merkmale.

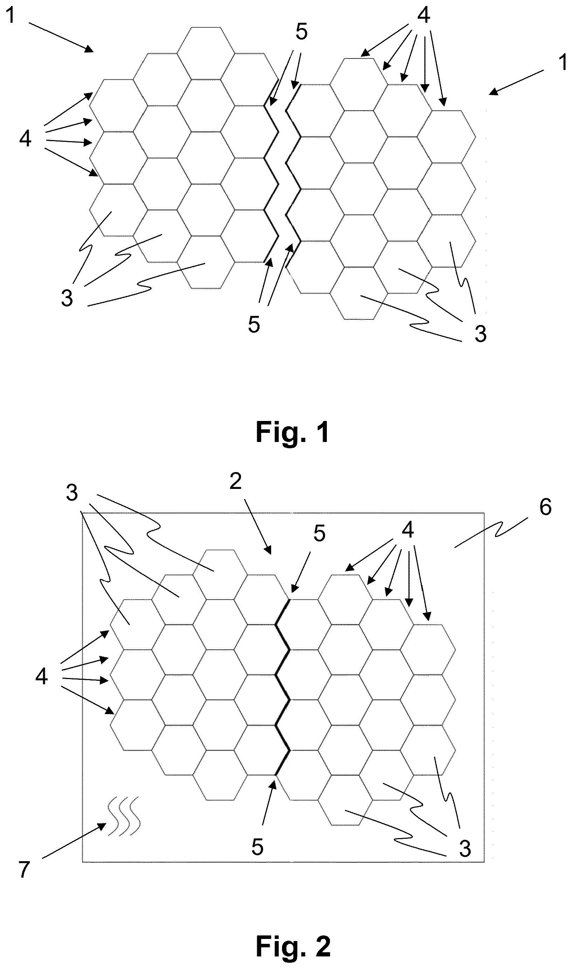

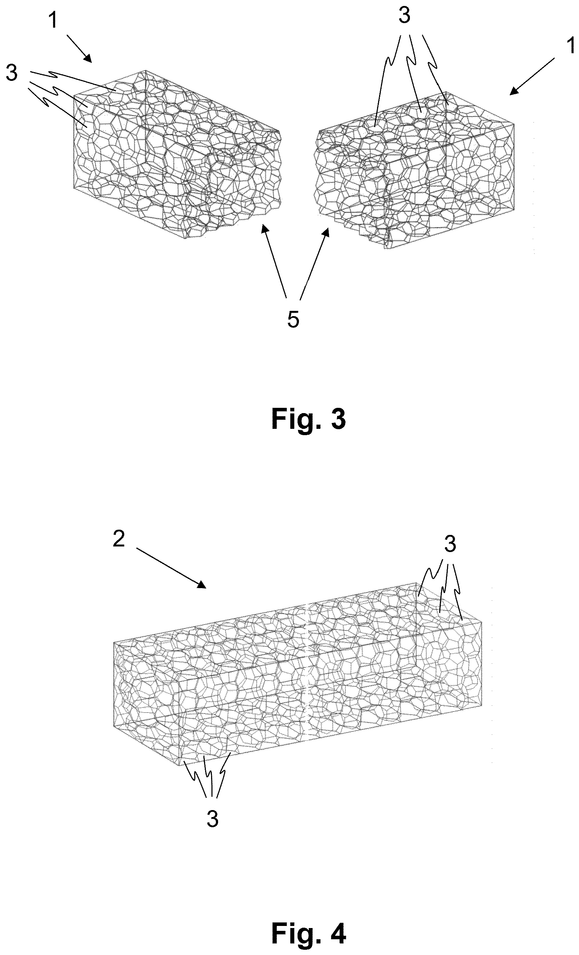

Figur 1 zeigt in einem zweidimensionalen Schema zwei Teilkörper 1, die zu einem erfindungsgemäßen Körper 2 (siehe Figuren 2 und 4) in dem erfindungsgemäßen Verfahren zusammengefügt werden. Die zweidimensionale Darstellung dient der Veranschaulichung des Prinzips. In der Regel wird der Körper 2 eine dreidimensionale Form haben. Wie in der Figur 1 dargestellt, weisen die beiden Teilkörper 1 eine übereinstimmende Gitterstruktur auf. In diesem Beispiel weisen die Gitterstrukturen hexagonale Einheitszellen 3 auf, aus denen die Gitterstruktur aufgebaut ist. Es können auch weniger symmetrische Einheitszellen verwendet werden. Eine Kombination aus verschiedenen Gittermotiven als kleinste Einheit des Gitters ist ebenfalls denkbar.

Die Teilkörper 1 sind derart begrenzt, dass nur vollständige Einheitszellen 3 in der Gitterstruktur vorhanden sind. Anders ausgedrückt sind die Teilkörper 1 von Begrenzungsflächen 4 der Einheitszellen 3 begrenzt. Ebenso wird eine Fügefläche 5 bzw. eine Vielzahl von Fügeflächen 5, an der sich die Teilkörper 1 während des Verfahrens berühren (siehe auch Figur 2), von einer Vielzahl von Begrenzungsflächen 4 der Einheitszellen 3 gebildet.

Figur 2 zeigt in einem zweidimensionalen Schema das erfindungsgemäße Verfahren zur Herstellung des zusammengesetzten Körpers 2. Die wenigstens zwei in einem additiven Fertigungsverfahren hergestellten Teilkörper 1 werden derart in einer Kammer 6 platziert, dass sie sich an wenigstens einer Fügefläche 5 berühren. In der Kammer 6 liegt eine Lösungsmittelatmosphäre 7 vor. Durch die Lösungsmittelatmosphäre 7 wird einerseits eine Oberfläche der Teilkörper 1 geglättet. Andererseits entsteht an der wenigstens einen Fügefläche 5 eine stoffschlüssige Verbindung zwischen den Teilkörpern 1, wodurch der zusammengesetzte Körper 2 erzeugt wird. Durch die aufeinander abgestimmte Form der Teilkörper 1 durch die Begrenzungsflächen 4 der Einheitszellen 3 können die Teilkörper 1 formschlüssig verbunden werden.

Der zusammengesetzte Körper 2 hat insbesondere eine durchgängige und homogene Gitterstruktur. Idealerweise ist die wenigstens eine Fügefläche 5 nach Abschluss des Verfahrens nicht mehr erkennbar. Die Lösungsmittelatmosphäre 7 kann auf die bereits beschriebenen Arten hergestellt werden. Zur Sicherheit ist die Kammer 6, beispielsweise während der Präsenz der Lösungsmittelatmosphäre 7, hermetisch abgeschlossen. Die Teilkörper 1 können beispielsweise in der Kammer 6 auf nicht dargestellten Stützen platziert werden oder an nicht dargestellten Haken aufgehängt werden.

Die Figuren 3 und 4 zeigen ein dreidimensionales Modell der Teilkörper 1 und des zusammengesetzten Körpers 2. Der Körper 2 besitzt eine Quaderform, wobei eine längsseitige Ausdehnung des Körpers 2 beispielsweise die Breite einer entsprechenden 3D-Druckvorrichtung überschreitet. Aus diesem Grund wird der Körper 2 vor der Herstellung in zwei Teilkörper 1 unterteilt, die jeweils in einer entsprechenden 3D-Druckvorrichtung hergestellt werden.

Bei der Trennung des Körpers 2 in die Teilkörper 1 wird darauf geachtet, dass die Einheitszellen 3 bei der Trennung erhalten bleiben. Hierdurch wird gewährleistet, dass sich die Teilkörper 1 später formschlüssig zusammensetzen lassen. Die Teilkörper 1 und der Körper 2 weisen eine dreidimensionale Gitterstruktur auf. Durch diese Gitterstrukturen kann die Elastizität des Körpers 2 gezielt beeinflusst werden. Eine materialsparende Herstellung ist möglich. Der zusammengesetzte Körper 2 eignet sich beispielsweise als Polsterung. Wie in Figur 4 gezeigt, sind bei dem zusammengesetzten Körper 2 die Teilkörper 1 nicht mehr einzeln erkennbar.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn sie in unterschiedlichen Ausführungsbeispielen dargestellt und beschrieben sind.

### Bezugszeichenliste

- 1: Teilkörper
- 2: Körper
- 3: Einheitszelle
- 4: Begrenzungsfläche
- 5: Fügefläche
- 6: Kammer
- 7: Lösungsmittelatmosphäre

## Patentansprüche

1. Verfahren zur Herstellung eines zusammengesetzten Körpers (2) aus wenigstens zwei Teilkörpern (1), wobei wenigstens einer der Teilkörper (1) in einem additiven Fertigungsverfahren hergestellt wird, wobei die wenigstens zwei Teilkörper (1) in einer Kammer (6) einer Lösungsmittelatmosphäre (7) ausgesetzt werden, so dass eine Oberfläche der Teilkörper (1) geglättet wird, wobei die wenigstens zwei Teilkörper (1) derart in der Kammer (6) platziert werden, dass sie sich an wenigstens einer Fügefläche (5) berühren und somit an der wenigstens einen Fügefläche (5) durch die Lösungsmittelatmosphäre (7) eine stoffschlüssige Verbindung zwischen den wenigstens zwei Teilkörpern (1) entsteht, **dadurch gekennzeichnet, dass** die wenigstens zwei Teilkörper (1) an der wenigstens einen Fügefläche (5) formschlüssig zusammengefügt werden.

2. Verfahren nach einem der vorherigen Ansprüche, **dadurch gekennzeichnet, dass** wenigstens einer der Teilkörper (1) in einem pulverbasierten 3D-Druckverfahren hergestellt werden.

3. Verfahren nach einem der vorherigen Ansprüche, **dadurch gekennzeichnet, dass** wenigstens einer der Teilkörper mit einer Gitterstruktur hergestellt wird.

4. Verfahren nach einem der vorherigen Ansprüche, **dadurch gekennzeichnet, dass** die wenigstens zwei Teilkörper (1) derart in der Lösungsmittelatmosphäre (7) platziert werden, dass sie sich an einer Vielzahl von Fügeflächen (5) berühren, wobei die Vielzahl der Fügeflächen (5) einer Vielzahl von Begrenzungsflächen (4) der Einheitszellen (3) der Struktur der Teilkörper (1) entspricht.

5. Verfahren nach einem der vorherigen Ansprüche, **dadurch gekennzeichnet, dass** die Teilkörper (1) derart zusammengefügt werden, dass eine einheitliche Gitterstruktur des zusammengesetzten Körpers (2) entsteht.

6. Verfahren nach einem der vorherigen Ansprüche, **dadurch gekennzeichnet, dass** die wenigstens zwei Teilkörper (1) mit wenigstens einem Verbindungselement, insbesondere einem Verbindungsgelenk, hergestellt werden und/oder über das Verbindungselement zusammengeklappt werden, so dass die beiden Teilkörper (1) mit ihren korrespondierenden Fügeflächen (5) aneinander anliegen.

7. Verfahren nach einem der vorherigen Ansprüche, **dadurch gekennzeichnet, dass** die wenigstens zwei Teilkörper (1) aus einem Thermoplast, insbesondere Polyamid 12 und/oder einem Elastomer, insbesondere TPU, hergestellt werden.

8. Verfahren nach einem der vorherigen Ansprüche, **dadurch gekennzeichnet, dass** die Lösungsmittelatmosphäre (7) Chloroform, Tetrahydrofuran, Dimethylformamid, Dimethylacetamid, N-Methylpyrrolidon, Dimethylsulfoxid, Hexafluorisopropanol, Pyridin und/oder Benzylalkohol enthält.

9. Zusammengesetzter Körper (2), der aus wenigstens zwei Teilkörpern (1) zusammengesetzt ist, wobei wenigstens einer der Teilkörper (1) in einem additiven Fertigungsverfahren hergestellt ist, wobei der Körper (2) nach einem Verfahren eines der vorherigen Ansprüche hergestellt ist.

## Claims

1. Method for producing a composite body (2) from at least two partial bodies (1), wherein at least one of the partial bodies (1) is produced in an additive manufacturing process, wherein the at least two partial bodies (1) are exposed to a solvent atmosphere (7) such that one surface of the partial bodies (1) is smoothed, wherein the at least two partial bodies (1) are placed in the chamber (6) in such a way that they touch at least one joining surface (5) and wherein the solvent atmosphere (7) leads to the creation of a cohesive connection between the at least two partial bodies (1) on the at least one joining surface (5) **characterized in that** the at least two partial bodies (1) are joined together in a positive-fitting manner on the at least one joining surface (5).

2. Method according to one of the preceding claims, **characterized in that** at least one of the partial bodies (1) is produced in a powder-based 3D printing process.

3. Method according to one of the preceding claims, **characterized in that** at least one of the partial bodies is produced with a lattice structure.

4. Method according to one of the preceding claims, **characterized in that** the at least two partial bodies (1) are placed in the solvent atmosphere (7) in such a way that they touch at a plurality of joining surfaces (5), the plurality of joining surfaces (5) corresponding to a plurality of boundary surfaces (4) of the unit cells (3) of the structure of the partial bodies (1).

5. Method according to one of the preceding claims, **characterized in that** the partial bodies (1) are joined in such a way that a uniform lattice structure of the assembled body (2) is formed.

6. Method according to one of the preceding claims, **characterized in that** the at least two partial bodies (1) are produced with at least one connecting element, in particular a connecting joint, and/or are folded together via the connecting element, so that the two partial bodies (1) rest against one another with their corresponding joining surfaces (5).

7. Method according to one of the preceding claims, **characterized in that** the at least two partial bodies (1) are produced from a thermoplastic, in particular polyamide 12 and/or an elastomer, in particular TPU.

8. Method according to one of the preceding claims, **characterized in that** the solvent atmosphere (7) contains chloroform, tetrahydrofuran, dimethylformamide, dimethylacetamide, N-methylpyrrolidone, dimethyl sulphoxide, hexafluoroisopropanol, pyridine and/or benzyl alcohol.

9. Composite body (2) composed of at least two partial bodies (1), with at least one of the partial bodies (1) being produced in an additive manufacturing process, wherein the body (2) is produced according to a method of one of the preceding claims.

## Revendications

1. Procédé de fabrication d'un corps assemblé (2) à partir d'au moins deux corps partiels (1), dans lequel au moins l'un des corps partiels (1) est fabriqué dans un procédé de fabrication additive, dans lequel les au moins deux corps partiels (1) sont exposés dans une chambre (6) à une atmosphère de solvant (7), de sorte qu'une surface des corps partiels (1) est lissée, dans lequel les au moins deux corps partiels (1) sont placés dans la chambre (6) de telle sorte qu'ils se touchent au niveau d'au moins une surface d'assemblage (5) et qu'une liaison par liaison de matière entre les au moins deux corps partiels (1) se forme ainsi au niveau de l'au moins une surface d'assemblage (5) par l'atmosphère de solvant (7), **caractérisé en ce que** les au moins deux corps partiels (1) sont assemblés par liaison de forme au niveau de l'au moins une surface d'assemblage (5).

2. Procédé selon l'une quelconque des revendications précédentes, **caractérisé en ce qu'**au moins l'un des corps partiels (1) est fabriqué dans un procédé d'impression 3D à base de poudre.

3. Procédé selon l'une quelconque des revendications précédentes, **caractérisé en ce qu'**au moins l'un des corps partiels est fabriqué avec une structure réticulaire.

4. Procédé selon l'une quelconque des revendications précédentes, **caractérisé en ce que** les au moins deux corps partiels (1) sont placés dans l'atmosphère de solvant (7) de telle sorte qu'ils se touchent au niveau d'une pluralité de surfaces d'assemblage (5), dans lequel la pluralité de surfaces d'assemblage (5) correspond à une pluralité de surfaces de délimitation (4) des cellules unitaires (3) de la structure des corps partiels (1).

5. Procédé selon l'une quelconque des revendications précédentes, **caractérisé en ce que** les corps partiels (1) sont assemblés de telle sorte qu'une structure réticulaire uniforme du corps assemblé (2) se forme.

6. Procédé selon l'une quelconque des revendications précédentes, **caractérisé en ce que** les au moins deux corps partiels (1) sont fabriqués avec au moins un élément de liaison, en particulier une articulation de liaison, et/ou sont repliés sur l'élément de liaison, de sorte que les deux corps partiels (1) s'appliquent l'un contre l'autre avec leurs surfaces d'assemblage (5) correspondantes.

7. Procédé selon l'une quelconque des revendications précédentes, **caractérisé en ce que** les au moins deux corps partiels (1) sont fabriqués à partir d'un thermoplastique, en particulier de polyamide 12 et/ou d'un élastomère, en particulier de TPU.

8. Procédé selon l'une quelconque des revendications précédentes, **caractérisé en ce que** l'atmosphère de solvant (7) contient du chloroforme, du tétrahydrofurane, du diméthylformamide, du diméthylacéta-mide, de la N-méthylpyrrolidone, du diméthylsulfoxyde, de l'hexafluoroisopropanol, de la pyridine et/ou de l'alcool benzylique.

9. Corps assemblé (2), qui est composé d'au moins deux corps partiels (1), dans lequel au moins l'un des corps partiels (1) est fabriqué dans un procédé de fabrication additive, dans lequel le corps (2) est fabriqué selon un procédé selon l'une quelconque des revendications précédentes.
